# EUROPEAN PATENT APPLICATION

(11) **EP 1 170 656 A2**
(43) Date of publication of application: **09.01.2002**
(21) Application number: 01303637.1
(22) Date of filing: 20.04.2001
(51) Int. Cl.: G06F 1/16

(54) **Wireless computer display**

(30) Priority: 03.07.2000 US 609804
(71) Applicant: Xybernaut Corporation, Fairfax, Virginia 22033 (US)
(72) Inventor: NG, Richard, Centreville, VA 20121 (US)
(74) Representative: Goode, Ian Roy

(57) **Abstract**

A computer system includes a transmission system which uses a TV display (7) that receives a low power analog NTSC or PAL-TV signal from a base computer (1) via wireless transmission. By embedding a small low power transmitter (4) on a computer and converting the signal to NTSC or PAL it is possible to transmit the same image as would be seen on a monitor and receive the same signal on a mini-TV-type display powered by a small battery.

## Description

This invention relates to a computer system and, more, specifically, to a computer system having a display using wireless technology.

In U.S. Pat. No. 5,305,244 (Newman I), a hands-free user supported portable computer is disclosed. The disclosed compact mobile computer of Newman I is now commercially available from Xybernaut Corporation of Fairfax, Virginia, under the registered trademark "Mobile Assistant®". U.S. Pat. No. 5,305,244 contains the specifics of the Mobile Assistant in both construction and function. Also, U.S. patent 5,844,824 (Newman II) owned by the same entity as the present application, discloses further variations of the Mobile Assistant® including activation means other than voice activation means. In both U.S. Pat. No. 5,305,244 and U.S. Pat. 5,844,824, a mobile body-worn computer apparatus is disclosed having means for attachment of the computer and display to a user. The Mobile Assistant® is very lightweight, versatile and efficient and can be used in ways in which other stand-alone or laptop computers may not be used. The display is in communication with the computer via cables or wires and can be a flat panel display worn anywhere on the user.

Flat panel computer displays are well known in the computer arts. They come in various permutations, some which merely display output and some with an overlying touch screen layer which allows two-way communication to a PC. However, all generally receive their input from a wired video output of an attached or cable attached computer. Due to the amount of bandwidth necessary for wireless digital image transmission, and the enormous power supply currently required to support that bandwidth, there is no simple yet effective method of transferring computer output wirelessly to such a display. The primary limitation is that the power requirement for doing so would simply be too great to be of use for wearable or remote computing, such as in Newman I and Newman II where batteries are providing all system power. Thus, there exists a need for a method of transmitting display information in a power efficient manner that is still robust in its capability to a flat panel or other display device. It would further be desirable for this device to have a touch screen or similar navigation capability so that that if the display was too far from the base computer from which it was receiving its signal, the operator would still be able to control it without using an input device which is wired to the computer.

It is therefore an object of this invention to provide a system for effecting wireless transmission of display information for a computer output display which meets these needs.

According to the present invention, there is provided a computer system comprising a computer unit and a display unit, the display unit including wireless communication means for receiving display information from the computer unit, characterised in that the computer unit includes transmission means for transmitting the display information in the form of a television broadcast signal.

The invention also provides a wireless method for transmitting a signal from a conventional computer which comprises providing in said computer a transmitter, using said transmitter to convert a computer output signal to NTSC or PAL or similar converted signal, transmitting said converted signal to a receiver located in a TV-type display unit, and displaying said converted signal on a display located in the display unit.

The invention provides a wireless display that can be used wherever a flat portable display is required.

The invention provides a computer system which utilizes a TV display device in wireless transmission of an image to a display device.

The invention provides a display that is capable of functioning as an interactive TV set or receiver, or for displaying a wired or wireless signal from a VCR, video camera or video disc player or any other similar broadcast or output device.

The invention also provides a simple yet effective method of transferring computer output wirelessly to a flat panel or other computer display.

The invention is accomplished generally speaking by a transmission system which utilizes a TV display device which receives a low power analog television broadcast signal such as a NTSC (National Television Standards Committee) or PAL-TV signal from the base computer via wireless transmission. Since the image is being transferred as a low power TV signal, bandwidth is not a limiting issue as with digital transmission. By including a small low power transmitter in a computer and converting the signal to NTSC or PAL, it is possible to transmit the same image as would be seen on a computer monitor and receive the signal on a mini TV-type display powered by an AA or other battery. By adding a wireless mouse (IRDA), an integrated mouse, or a similar navigation device into the display, the display can be completely wireless.

The system of the instant application utilizes a TV display device which receives a low power analog NTSC or PAL TV signal from the base computer via wireless transmission. Because the image is being transferred as a low power TV signal, bandwidth is not a limiting issue as with digital transmission. Additionally, full motion color video can be easily transmitted, a feat not possible with today's low power wireless digital transmission. The display itself can have a digital layer over the analog display so that the operator, using a stylus, attached or integrated wireless pointing device or his finger can drive and interact with the operating system and applications being displayed on the screen. Additionally, the display is capable of functioning as a television set or analog display for displaying a wired signal from any analog output device such as a VCR, video camera, or video disc player.

An embodiment of the invention will now be described, by way of example, with reference to the accompanying drawing, in which:

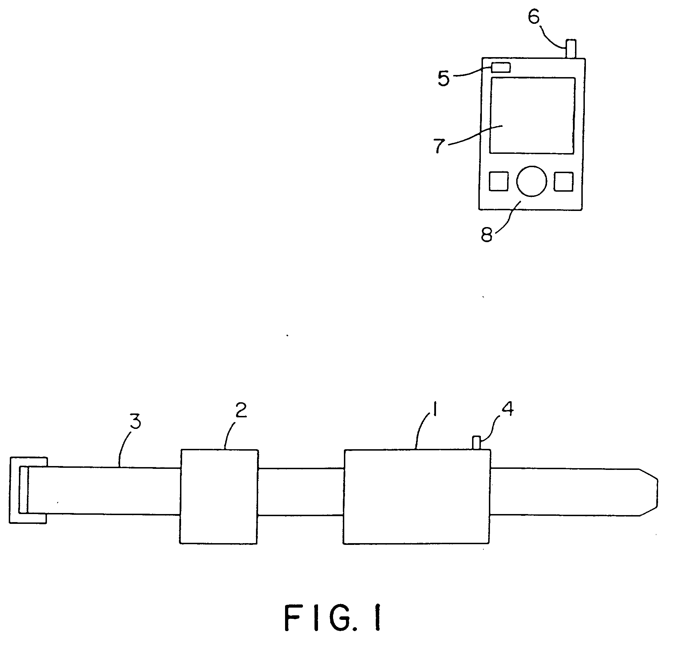

Figure 1 illustrates the components used in the display system of the present invention.

Figure 1 illustrates the wireless display with mouse configured with a Mobile Assistant® computer system. Item 1 is the CPU enclosure. Item 4 is a wireless transmitter for sending converted video signals to the display. Item 2 is the external battery and 3 is a belt which may support the unit, allowing the user to wear it. Items 5 through 8 relate to the display itself. Item 7 is the video screen which may have an optional digital touch screen layer superimposed on it. Item 5 is a power saving button so that the display may power down when it has been idle for a period of time. Item 6 is a standard NTSC or PAL receiver for receiving the output signal from the computer. Item 8 is an optional wireless mouse using as an example, BlueTooth or IrDA for transmitting digital position information back to the CPU so that the user has the "feel" of using a digital flat panel display (FPD). The invention provides a system for wirelessly operating a computer interface remote from a base computer system and capable of sustaining an equivalent of a very high baud rate digital transmission capable of showing full motion color video. The computer component can be any "conventional computer" having the computer components disclosed in Newman I or II, or any computer supplied by IBM, Apple, Compaq, Dell, Hewlett Packard, etc. The system as a whole consists of an analog NTSC or PAL compliant TV display/tuner, a personal computer, and digital and analog signal transmitters and receivers. The invention makes use of existing analog and digital transmission protocols to create a unique, robust display device for use with personal computers. The underlying computer 1 can be any computer system, such as desktop, laptop, wearable, or server. A module must reside with, be attached to, or be integrated into the computer, which is capable of converting the digital VGA output signal to an analog signal and transmitting the signal using a low power television transmitter 4. Optionally, the module is capable of scrambling the output signal prior to transmission for security purposes. The transmitter 4 is of relatively low power because of the close proximity of the receiver 6 and the power constraints associated with mobile computing. An FCC license may or may not be required for this device depending upon the output power of the transmitter 4 and the signal band being used. The display 7 contains an integrated industry standard or custom NTSC or PAL receiver to receive the signal, de-scramble it if necessary, and then display it on the television-like display. These type receivers are well known in the art of television and are employed in every commercially available television worldwide in countries which utilize either the NTSC or PAL standard. These include nearly every modern country in the world and many developing countries as well. The NTSC standard, devised in 1953, has a fixed vertical resolution of 525 lines with varying amounts of lines making up the horizontal resolution. NTSC is also commonly used to refer to one type of television signal that can be recorded on various tape formats such as VHS, ¾" U-matic and Betacam. PAL, or Phase Alternation by Line, was adopted in 1967. It has 625 lines of vertical resolution and varying horizontal resolution. Both standards display roughly 30 frames per second. Generally speaking, NTSC is the default standard in North and South America, while PAL is the predominant standard in Europe.

The display enclosure itself may be in the physical form of a flat panel display (FPD), head mounted display (HMD) or other user worn or carried display device. Within the enclosure is housed a television display and analog signal receiver, power supply, and optional signal decoding circuitry. In this manner, the display device 7 is able to receive an analog television compliant signal from the transmitter 4 attached or integrated into the computer system within reasonable proximity to the display 7. Overlaying the analog display is a digital matrix layer which allows for precise digital input which is synchronized with information on the display. This layer allows the user to supply input to computer 1 using a stylus, touch screen actuation, an integral wireless pointing device 8, a retinal tracking device or other digital input device. As a result, precise x-y coordinate information can be sent back to the underlying PC so that the operating system or application software will respond just as it would in a wired environment. In order to effect this virtual digital interface a digital wireless transmitter 4 will be integral to the display device such as BlueTooth or IrDA. This device will communicate with a complementary receiver attached to the underlying computer 1. Thus, when a user attempts to invoke a shortcut or start a program, the underlying computer 1 will be responsive to these input commands and this response will be reflected by the analog display. The display 7 will have the look and feel of a traditional FPD displaying the operating system and any applications with seemingly consistent resolution and clarity of state-of-the-art digital displays.

In the preferred embodiment, the display device is part of a wearable computer system such as those in Newman I and II. In such an environment, the present invention permits the user to separate the display device 7 from the underlying computer 1 without losing the ability to display output and perform computer operations. For example, a police officer could exit his car and need only carry or wear his display device 7 yet still be able to fully utilize his computer system with no loss in system rigor.

In another embodiment, the display 7 and underlying computer system could stay on the person of the user. However, through the use of wireless analog and digital transmission, a cable is no longer required to connect the output device to the input device. In such an embodiment, even less power is used by the transmitter because of the close proximity between the transmitter and receiver, further improving battery life. It may be desirable to include a power gain control 5, automatic or manual, for adjusting the power of the output signal commensurate with the required transmission range, thus conserving power whenever possible. Because of the analog nature of the output transmission, live or on-demand full motion color or monochrome video can easily be transmitted to and displayed by the display 7 without the need of expensive high bandwidth transmitter or expensive digital video hardware. Thus, the primary feature of the invention is to provide the user with the experience of interfacing with a standard digital computer monitor while capturing the benefits of cheap and easy high bandwidth analog transmission of video with the added convenience of displaying without wires and reduced powler consumption. The display 7 will also function as a TV receiver and tuner for purposes of receiving and displaying the data signal from the computer as well as any ambient detectable broadcast television signals. Optionally, the main background of the screen will be a standard computer display, while a variable size window will exist for broadcast TV reception or viewing of video input, much like on a standard computer capable of displaying television or video. The system also has standard video inputs for displaying wired input from any analog output device such as a video camera, VCR or video disc player.

## Claims

1. A computer system comprising a computer unit (1) and a display unit (7), the display unit including wireless communication means (6) for receiving display information from the computer unit, **characterised in that** the computer unit includes transmission means (4) for transmitting the display information in the form of a television broadcast signal.

2. A computer system comprising in wireless electrical connection a display unit including a display and a receiver, and a computer unit including a computer and a transmitter, said transmitter having means that convert an output signal of the computer into NTSC, PAL, or for any other television broadcast signal, said receiver comprising a standard television receiver and having means to receive a signal from said transmitter, said receiver being located in said display unit and said transmitter being in contact with said computer.

3. The computer system of claim 1 or claim 2 wherein the display unit includes wireless control means (8) for controlling the computer unit.

4. The system of any one of claims 1 to 3 wherein said display unit includes a wireless mouse using IrDA, BlueTooth, RF, 802.11 or other wireless protocol.

5. The computer system of any one of claims 1 to 4 wherein said display unit comprises a power saving button or feature.

6. The computer system of any one of claims 1 to 5 wherein said display unit has a screen comprising a digital layer over an analog display providing thereby means for using a pointing or navigation means to drive said system when desired.

7. The computer system of any one of claims 1 to 6 wherein said display unit has means for displaying a wired or wireless signal from an analog output device selected from the group consisting of a VCR, a video camera, a video disc player, other video signal output device and mixtures thereof.

8. A wireless method for transmitting a signal from a conventional computer which comprises providing in said computer a transmitter, using said transmitter to convert a computer output signal to NTSC or PAL or similar converted signal, transmitting said converted signal to a receiver located in a TV-type display unit, and displaying said converted signal on a display located in the display unit.

9. The method of claim 8 wherein said receiver is capable of receiving and displaying more than one simultaneous signal frequency.
